(19) Europäisches Patentamt

European Patent Office

Office européen des brevets

(11) **EP 1 676 764 A1**

(12) **EUROPEAN PATENT APPLICATION**

(43) Date of publication:
**05.07.2006 Bulletin 2006/27**

(51) Int Cl.:
***B60T 8/1755*** (2006.01)     ***B60K 31/00*** (2006.01)

(21) Application number: **05257952.1**

(22) Date of filing: **22.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **28.12.2004 JP 2004381078**

(71) Applicant: **NISSAN MOTOR CO., LTD.**
**Yokohama-shi,**
**Kanagawa 221-0023 (JP)**

(72) Inventors:
• **Ozaki, Masahiro**
**c/o Nissan Motor Co., Ltd**
**Yokohama-shi**
**Kanagawa, 221-0023 (JP)**

• **Tanaka, Tomonori**
**c/o Nissan Motor Co., Ltd**
**Yokohama-shi**
**Kanagawa, 221-0023 (JP)**
• **Imaizumi, Takashi**
**c/o Nissan Motor Co., Ltd**
**Yokohama-shi**
**Kanagawa, 221-0023 (JP)**

(74) Representative: **Holmes, Matthew William**
**Nissan Technical Centre Europe Ltd,**
**Intellectual Property Department,**
**Cranfield Technology Park**
**Bedfordshire, MK43 0DB (GB)**

(54) **Lane departure prevention system**

(57)    A lane departure prevention system comprises a driving-power difference generating unit for generating a driving power difference between left and right driving wheels, a braking power difference generating unit for generating a braking power difference between left and right wheels, a departure tendency determining unit for determining a tendency of departure of a vehicle from a lane of travel, and a yaw moment applying unit for switching a departure avoidance control for applying, to the vehicle, a yaw moment generated by the driving-power difference generating unit and a departure avoidance control for applying, to the vehicle, the yaw moment generated by the braking-power difference generating unit, on the basis of a driving state of the vehicle (vehicle speed, road-surface friction coefficient) when the departure tendency determining unit determines that the vehicle has a tendency to depart from the lane of travel.

FIG.2

EP 1 676 764 A1

**Description**

The present invention relates to a lane departure prevention system and particularly, but not exclusively, to a system for preventing departure of a vehicle from a lane of travel when the vehicle is tending to depart from the lane.

In a lane departure prevention system, a yaw moment is applied to a vehicle in a direction of avoiding departure by generating a braking power difference between left and right wheels when it is determined that the vehicle is tending to depart from a traveling lane.

However, the creation of a yaw moment adequate to avoid the lane departure may not be generated by the braking power difference, depending upon the "driving states" such as a vehicle speed or a road-surface friction coefficient m. For example, the yaw moment may not be sufficient when driving at a low speed or on a road surface having a small road-surface friction coefficient m. In addition, since the application of the yaw moment to the vehicle by the braking power difference always causes deceleration of the vehicle, the driver is made uncomfortable.

Furthermore, by applying a large yaw moment to the vehicle, a torque may be applied to the steering wheel from the tires, thereby also making the driver uncomfortable.

It is an aim of the present invention to address this issue. Further aims and advantages of the invention will become apparent from the following description, claims and drawings.

According to one aspect of the present invention, therefore, there is provided A system for preventing departure of a vehicle from a lane of travel comprising driving-power difference generating means for generating a driving power difference between left and right driving wheels, braking power difference generating means for generating a braking power difference between left and right wheels, departure tendency determining means for determining whether the vehicle is tending to depart from the lane of travel, and control means for controlling the driving-power difference generating means and/or the braking power difference generating means to selectively apply a yaw moment to the vehicle, in dependence on a driving state of the vehicle, when said departure tendency determining means determines that the vehicle has a tendency to depart from the lane of travel.

According to another aspect of the invention there is provided a lane departure prevention system comprising a driving-power difference generating unit for generating a driving power difference between left and right driving wheels, a braking power difference generating unit for generating a braking power difference between left and right wheels, a departure tendency determining unit for determining a tendency of departure of a vehicle from a lane of travel, and a yaw moment applying unit for switching a departure avoidance control for applying, to the vehicle, a yaw moment generated by said driving-power difference generating unit and a departure avoidance control for applying, to the vehicle, the yaw moment generated by said braking-power difference generating unit, on the basis of a driving state of the vehicle when said departure tendency determining unit determines that the vehicle has a tendency to depart from the lane of travel.

In one embodiment, the system further includes a vehicle speed detecting unit for detecting a vehicle speed of the vehicle, wherein said yaw moment applying unit switches the departure avoidance control by said driving-power difference generating unit and the departure avoidance control by said braking-power generating unit, on the basis of a detection result of said vehicle speed detecting unit.

In one embodiment said yaw moment applying unit selects the departure avoidance control by said driving-power difference generating unit when the vehicle speed is lower than a predetermined speed and selects the departure avoidance control by said braking-power difference generating unit when the vehicle speed is equal to or higher than the predetermined speed.

In one embodiment, the system further includes a road-surface friction coefficient detecting unit for detecting a road-surface friction coefficient of the lane of travel of the vehicle, wherein said yaw moment applying unit switches the departure avoidance control by said driving-power difference generating unit and the departure avoidance control by said braking-power generating unit, on the basis of the detection result of said road-surface friction coefficient detecting unit.

In one embodiment, said yaw moment applying unit selects the departure avoidance control by said driving-power difference generating unit when the lane of travel of the vehicle has a small road-surface friction coefficient and selects the departure avoidance control by said braking-power difference generating unit when the lane of travel of the vehicle has a large road-surface friction coefficient.

In one embodiment, when the lane of travel has both a first road surface having a small road-surface friction coefficient and a second road surface having a large road-surface friction coefficient, said yaw moment applying unit generates the driving power difference between the left and right driving wheels on the first road surface having the small road-surface friction coefficient by said driving-power difference generating unit and generating the braking power difference between the left and right wheels by applying braking power to a wheel on the second road surface having the large road-surface friction coefficient by said braking-power difference generating unit.

In one embodiment, a reactive force for canceling an input to a steering system due to a torque steer resulting from the driving power difference generated between the left and right wheels by said yaw moment applying unit is input to the steering system.

In one embodiment, a reactive force for canceling an input to a steering system due to a torque steer resulting from the braking power difference generated between the left and right wheels by said yaw moment applying unit is input to the steering system.

According to a further aspect of the invention there is provided a method for preventing departure of a vehicle, having at least two driving wheels, from a lane of travel comprising generating a driving power difference between the driving wheels, generating a braking power difference between the wheels, determining whether there is a tendency for the vehicle to depart the lane of travel and selectively applying a yaw moment to the vehicle by means of said driving power difference and/or said braking power difference.

According to a still further aspect of the invention there is provided a method for preventing lane departure for use with a vehicle having at least two driving wheels comprising generating a driving power difference between the driving wheels, generating a braking power difference between the driving wheels, determining a tendency of departure of a vehicle from a lane of travel and applying selectively a yaw moment using said generating steps.

In one embodiment, the method further comprises the steps of detecting a vehicle speed of the vehicle and using the vehicle speed to make a determination as to the applying step.

In one embodiment, the method further comprises detecting a road-surface friction coefficient of the lane of travel and using the friction coefficient to make a determination as to the applying step.

In one embodiment the method further comprises applying a reactive force selectively to a steering system for canceling an input due to a torque steer resulting from the driving power difference generated between the drive wheels.

Embodiments of the invention provide a lane departure prevention system which can generate a yaw moment necessary for avoiding the lane departure without discomforting the driver.

A "driving state" may include a state of a vehicle while driving (speed, acceleration, tire air pressure, or the like), a state of a road (road-surface friction coefficient, ascent, descent, cant road, or the like), and peripheral environments (existence of a preceding vehicle or a succeeding vehicle or the like) or a combination of the above.

Embodiments of the present lane departure prevention system comprise a driving-power difference generating unit for generating a driving power difference between left and right driving wheels, a braking power difference generating unit for generating a braking power difference between left and right wheels, a departure tendency determining unit for determining a tendency of departure of a vehicle from a lane of travel, and a yaw moment applying unit for switching a departure avoidance control for applying, to the vehicle, a yaw moment generated by the driving-power difference generating unit and a departure avoidance control for applying, to the vehicle, the yaw moment generated by the braking-power difference generating unit, on the basis of a driving state of the vehicle when the departure tendency determining unit determines that the vehicle has a tendency to depart from the lane of travel.

Since the yaw moment is applied to the vehicle by the driving power difference or the braking power difference between the left and right driving wheels according to the states of vehicle, it is possible to satisfactorily generate the yaw moment necessary for avoiding the lane departure without making the driver uncomfortable.

Here, it may be regarded that a vehicle departs from a lane if all the wheels of the vehicle are outside the lane. Therefore, a vehicle may be tending to depart from the lane even when at least one of left and right side wheels crosses the lane unless all the wheels are outside the lane.

The various aspects and embodiments set out in the preceding paragraphs may be implemented individually or in any suitable combination thereof.

The present invention will now be described, by way of example only, with reference to the accompanying drawings, in which:

FIG. 1 is a schematic structural diagram illustrating an example of a vehicle in which the present lane departure prevention system is installed;

FIG. 2 is a flowchart illustrating details of a process executed by a controller of the lane departure prevention system;

FIG. 3 is a diagram used for explaining a braking wheels selecting process executed by the controller;

FIG. 4 is a diagram used for explaining a process of selecting the braking wheels executed by the controller;

FIG. 5 is a diagram used for explaining a braking wheels selecting process of executed by the controller;

FIG. 6 is a diagram used for explaining a braking wheels selecting process executed by the controller;

FIG. 7 is a diagram used for explaining a yaw angle;

FIG. 8 is a diagram used for explaining an estimated departure time Tout;

FIG. 9 is a diagram used for explaining torque steer;

FIG. 10 is a graph illustrating the relationship between a road-surface friction coefficient $\mu$ and a torque steer gain $K_{\mu,2}$; and

FIG. 11 is a graph illustrating the relationship between a time $T_{TLC}$ and a gain K6.

While the claims are not limited to the illustrated embodiments, an appreciation of various aspects of the system is best gained through a discussion of various examples thereof.

In a first embodiment, an example of a rear-wheel drive vehicle having a lane departure prevention system is described below. The rear-wheel drive vehicle is equipped with an automatic transmission, a conventional differential gear, and a braking system which can control independently braking powers of all the left and right wheels of front and rear ends.

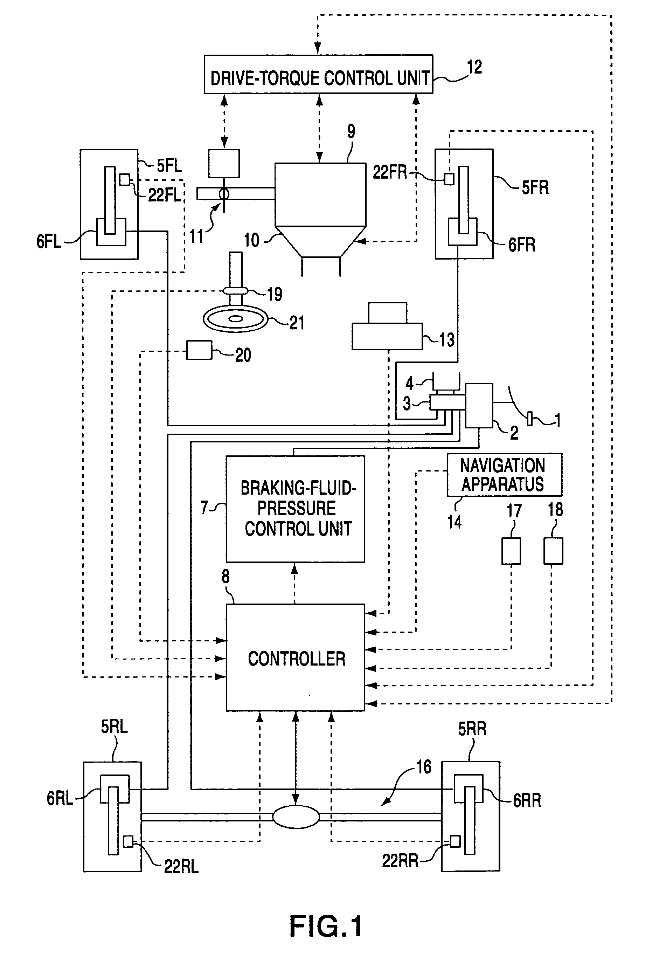

FIG. 1 is a schematic structural diagram illustrating an example of a lane departure prevention system.

As shown in FIG. 1, the braking system comprises a brake pedal 1, a booster 2, a master cylinder 3, and a reservoir 4. Generally, braking fluid pressure boosted by the master cylinder 3 is supplied to wheel cylinders 6FL to 6RR of respective wheels 5FL to 5RR according to the degree of depression of the brake pedal 1 by a driver. However, a braking-fluid-pressure control circuit 7 may be provided between the master cylinder 3 and the respective wheel cylinders 6FL to 6RR, and the braking fluid pressures of the respective wheel cylinders 6RL to 6RR may be individually controlled by the braking-fluid-pressure control circuit 7.

For example, a braking-fluid-pressure control circuit used for antiskid control or traction control may be used for the braking-fluid-pressure control circuit 7. In the present embodiment, the braking-fluid-pressure control circuit can independently boost up and reduce the braking fluid pressures of the respective wheel cylinders 6FL to 6RR. The braking-fluid-pressure control circuit 7 controls the braking fluid pressures of the respective wheel cylinders 6FL to 6RR according to the value of a braking-fluid-pressure command sent from a controller 8, which is described below.

For example, the braking-fluid-pressure control unit 7 includes an actuator in its fluid pressure supply system. An example of the actuator may include a proportional solenoid valve which can control the fluid pressures of the respective wheel cylinders with any braking fluid pressure.

The vehicle is provided with a drive torque control unit 12 for controlling drive torques of the rear wheels 5RL and 5RR, the drive wheels, by controlling the operational status of an engine 9, a selected speed-change ratio of an automatic transmission 10, and the throttle opening of a throttle valve 11. The operational status of the engine 9 can be controlled, for example, by controlling the volume of fuel injection or ignition timing, and can also be controlled by adjusting the throttle opening. The drive torque control unit 12 outputs the value of the drive torque Tw which was used for the control, to the controller 8.

The drive torque control unit 12 alone can control the drive torques of the rear driving wheels 5RL and 5RR, but can control the drive torques by referring to the drive torque command value when it is introduced from the controller 8.

The vehicle is also equipped with a LSD (Limited Slip Differential Gear) 16. In the present embodiment, the LSD 16 is provided only at the rear wheels.

The LSD 16 mounted on the vehicle is a so-called active LSD and can change driving power distributed to the left and right wheels as needed. In the present embodiment, as described below, the vehicle is prevented from departing from the lane travel by changing the driving power distributed to the left and right wheels to actively generate the driving power difference there between thereby generating the yaw moment to the vehicle. The LSD 16 is controlled by, for example, the controller 8. In place of the LSD, a device capable of controlling the distribution of the driving power may be provided separately from the controller 8.

The vehicle is provided with an image pickup unit 13. The image pickup unit 13 is used for detecting a lane departure tendency of the vehicle and serves to detect a position of the vehicle in the traveling lane. For example, the image pickup unit 13 is composed of a monocular camera including a CCD (Charge Coupled Device) camera. The image pickup unit 13 is provided at the front part of the vehicle.

The vehicle is provided with an image pickup unit 13 having an image processing function. The image pickup unit 13 is used for detecting that the vehicle is tending to depart from a lane of travel and serves to detect a position of the vehicle in its lane of travel. For example, the image pickup unit 13 comprises a monocular camera including a CCD (Charge Coupled Device) camera. The image pickup unit 13 is provided at the front part of the vehicle.

The image pickup unit 13 detects lane markers such as white lines from an image of the front side of the vehicle and detects the lane of travel on the basis of the detected lane markers. The image pickup unit 13 calculates an angle (yaw angle) $\phi$ formed by the lane of travel and a front-rear axis of the vehicle, a lateral displacement X of the vehicle from the center of the lane, and a lane curvature $\beta$ on the basis of the detected lane. The image pickup unit 13 outputs the yaw angle $\phi$, the lateral displacement X, and the lane curvature $\beta$ (road radius R) to the controller 8.

The vehicle is also equipped with a navigation apparatus 14. The navigation apparatus 14 detects forward acceleration Yg, lateral acceleration Xg, or a yaw rate $\phi$' of the vehicle. The navigation apparatus 14 outputs the forward acceleration Yg, the lateral acceleration Xg, and the yaw rate $\phi$' along with road information to the control unit 8. Here, the road information may include the number of lanes and road type information indicating whether the road is a general road or a highway.

In addition, the vehicle is provided with a master cylinder pressure sensor 17 for detecting an output pressure of the master cylinder 3, that is, master cylinder fluid pressures Pmf and Pmr, an accelerator opening sensor 18 for detecting the degree of depression of the accelerator pedal, that is, the degree of opening $\theta$t of the accelerator, a steering angle sensor 19 for detecting the steering angle $\delta$ of a steering wheel 21, a direction indicator switch 20 for detecting a direction indication operation of a direction indicator, and wheel speed sensors 22FL to 22RR for detecting rotational speeds of the respective vehicle wheels 5FL to 5RR, that is, so-called wheel speeds Vwi (where i = fl, fr, rl, rr). The detection signals of the sensors are output to the controller 8.

When the detected various data of the vehicle includes left and right directionalities, it is supposed that the left direction is plus or positive (and the right direction is minus or negative). That is, the yaw rate $\phi$', the lateral acceleration Xg, and the yaw angle $\phi$ have a positive value when the vehicle turns to the left. The lateral displacement X has a plus or positive value when the vehicle departs to the left from the center of the lane of travel. The forward acceleration Yg has a plus value at the time of acceleration and a minus value at the time of deceleration.

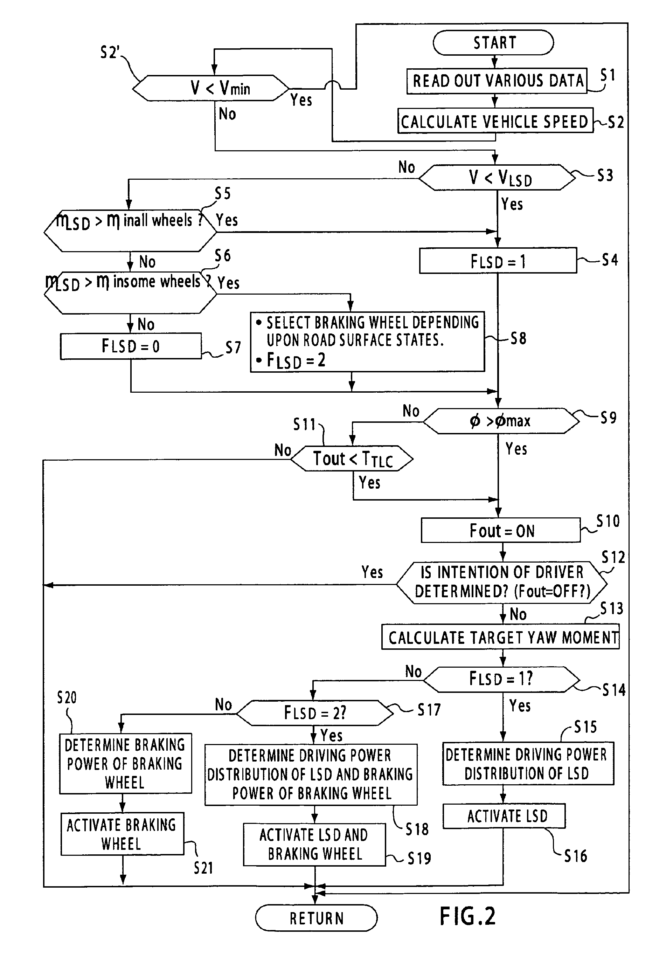

Next, a computing process executed by the controller 8 will be now described with reference to FIG. 2. The computing process is executed by means of timer interruption every predetermined sampling period of time $\Delta$T, for example, 10 msec. Although a communication process is not specifically provided in the computing processes of FIG. 2, the information obtained through the computing processes is updated and stored in a storage device on an as-needed basis and necessary information is read out from the storage device at any time on an as-needed basis.

First, in step S1 of the computing process, various data are read out from the sensors, the controller, and the control units. In particular, the information is read out as detected by the respective sensors, such as the traveling acceleration Yg, the lateral acceleration Xg, the yaw rate $\phi$', and the road information obtained by the navigation apparatus 14, the wheel speeds Vwi, the steering angle $\delta$, the opening degree $\theta$t of the accelerator, the master cylinder pressures Pmf and Pmr, and the direction indicator switch signal detected by the sensors, the drive torque Tw from the drive torque control unit 12, the yaw angle $\phi$, the lateral displacement X, and the traveling lane curvature $\beta$ obtained through the image pickup unit 13.

Subsequently, in step S2, the vehicle speed V is calculated. Specifically, the vehicle speed V is calculated from the following Equation (1) on the basis of the wheel speeds Vwi read out in step S1:

In case of front-wheel drive,

$$V = (Vwrl + Vwrr)/2$$

In case of rear-wheel drive,

$$V = (Vwfl + Vwfr)/2 \qquad (1)$$

Here, Vwfl and Vwfr are the wheel speeds of the respective left and right front ends and Vwrl and Vwrr are the wheel speeds of the respective left and right rear ends. That is, the vehicle speed V is calculated as an average value of the wheel speeds of the driven wheels in the Equation (1). Therefore, since in the present embodiment, the rear-wheel drive vehicle is described as an example, the vehicle speed V is calculated from the latter Equation, that is, the wheel speeds of the front ends.

The vehicle speed V calculated as described above is preferably used for normal driving operation. For example, when an ABS (Anti-lock Brake System) control is activated, vehicle speed estimated in the ABS control may be used as the vehicle speed V. A value used as navigation information in the navigation apparatus 14 may be also used as the vehicle speed V.

Next, in step S2', the vehicle speed V is compared with a predetermined speed $V_{min}$.

When the vehicle speed V is lower than the predetermined speed $V_{min}$, the process is ended. When the vehicle speed V is equal to or higher than $V_{min}$, the process proceeds to step S3.

Subsequently, in step S3, the vehicle speed V obtained in step S2 is compared with a predetermined threshold value $V_{LSD}$.

Here, when the vehicle is tending to depart from the lane of travel, the yaw moment is selectively generated by the braking power difference between the left and right wheels or the driving power difference between the left and right driving wheels through activation of the LSD 16. The predetermined threshold value $V_{LSD}$ is used to select means for generating the braking power difference or means for generating the driving power difference between the left and right driving wheels through activation of the LSD 16, in order to generate the yaw moment, and is obtained, for example, through experiments.

When the vehicle speed V is less than the predetermined threshold value $V_{LSD}$ ($V<V_{LSD}$) in step S3, the process proceeds to step S4 and when the vehicle speed V is greater than or equal to the predetermined threshold value $V_{LSD}$ ($V\geq V_{LSD}$), the process proceeds to step S5.

In step S4, a selection flag $F_{LSD}$ is set to "1", and the process proceeds to step S9.

On the other hand, in step S5, a value $\mu i$ (where i = fl, fr, rl, and rr) of a road-surface friction coefficient $\mu$ is determined with respect to all the wheels 5FL to 5RR. Specifically, the value $\mu i$ (where i = fl, fr, rl, and rr) of the road-surface friction coefficient $\mu$ of each wheel 5FL to 5RR is detected and the detected values $\mu i$ (where i = fl, fr, rl, and rr) of the road-surface friction coefficient $\mu$ are compared with a predetermined threshold value $\mu_{LSD}$.

Here, the road-surface friction coefficient $\mu$ of each wheel is detected by generally-known means, for example, from relations such as a rotation difference between the left and right wheels or a rotation status of the driving wheels with respect to the drive torque output. For example, the road-surface friction coefficient $\mu$ can be calculated as an estimate value from the following equation (2), by using a slip ratio $\alpha$:

$$\mu = K_{\mu 1}\alpha \qquad (2)$$

Here, $K_{\mu 1}$ is a vehicle conversion coefficient for defining the road-surface friction coefficient $\mu$.
In step S5, when the values $\mu i$ of the road-surface friction coefficient with respect to all the wheels 5FL to 5RR are less than a predetermined threshold value $\mu_{LSD}$, the process proceeds to step S4. When the values $\mu i$ of the road-surface friction coefficient with respect to all the wheels 5FL to 5RR are not less than the predetermined threshold value $\mu_{LSD}$, the process proceeds to step S6.

In step S6, it is determined whether the value of the road-surface friction coefficient $\mu i$ with respect to one or some of the wheels 5FL to 5RR is less than the predetermined threshold value $\mu_{LSD}$. Here, when the value of the road-surface friction coefficient $\mu i$ with respect to one or some of the wheels 5FL to 5RR is less than the predetermined threshold value $\mu_{LSD}$, the process proceeds to step S8. When the value $\mu i$ of the road-surface friction coefficient with respect to one or some of the wheels 5FL to 5RR is not less than the predetermined threshold value $\mu_{LSD}$, that is, when the value of the road-surface friction coefficient $\mu i$ with respect to all the wheels 5FL to 5RR are greater than or equal to the predetermined threshold value $\mu_{LSD}$, the process proceeds to step S7.

In the case the process proceeds to step S8, the road surface state is partially different in road-surface friction coefficient $\mu$ since the value $\mu i$ of the road-surface friction coefficient $\mu$ of one or some wheels is less than the predetermined threshold value $\mu_{LSD}$. For example, a so-called split friction-coefficient road has such a road surface state. In step S8, the braking wheel is selected based on such a road surface state. The braking wheel is selected with reference to Table 1.

| ROAD-SURFACE FRICTION COEFFICIENT $\mu$ | FRONT WHEEL | REAR WHEEL |
|---|---|---|
| Front wheel (wheel on the departure avoidance side): large Rear wheel: small | Braking | LSD |
| Front wheel (wheel on the departure avoidance side): large Rear wheel: large | | Braking (LSD) |
| Front wheel (wheel on the departure avoidance side): small Rear wheel: large | N/A | Braking (LSD) |
| Front wheel (wheel on the departure avoidance side): small Rear wheel: small | | LSD |

Here, when the lane departure is avoided by generating the braking power difference between the left and right wheels, it is a precondition that the wheel(s) on the departure avoidance side opposite to the direction of departure from the lane is selected as the braking wheel(s).

As described below, with reference to Table 1, the braking wheel is selected based on the road surface state.

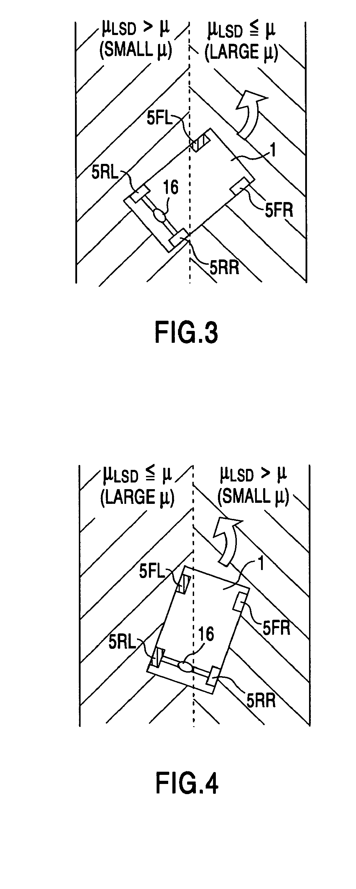

The road surface shown in FIG. 3 has a large road-surface friction coefficient $\mu$ on the right-hand side of the lane in the direction of travel of the vehicle 1 ($\mu\geq\mu_{LSD}$) and a small road-surface friction coefficient $\mu$ on the left-hand side of the lane ($\mu<\mu_{LSD}$). The vehicle 1 has a tendency to depart from the lane in the right direction, that is, the departure avoidance direction is the left in this case. The front wheels 5FL and 5FR of the vehicle 1 are on the road surface having the large road-surface friction coefficient $\mu$, and the rear wheels 5RL and 5RR are on the road surface having the small road-surface friction coefficient μ. In this case, the left front wheel 5FL which is on the road surface having the large road-surface friction coefficient μ and is positioned on the departure avoidance side is selected as the braking wheel to be activated in order to avoid the departure from the lane. Here, the LSD 16 is activated for the rear wheels 5RL and 5RR.

Contrary to the road surface state shown in FIG. 3, the road surface shown in FIG. 4 has a large road-surface friction coefficient μ on the left-hand side of the lane in the direction of travel of the vehicle 1 ($\mu \geq \mu_{LSD}$) and a small road-surface friction coefficient μ on the right-hand side of the lane ($\mu < \mu_{LSD}$). In this case, the vehicle 1 has a tendency to depart from the lane in the right direction, that is, the departure avoidance direction is the left. The left front and rear wheels 5FL and 5RL of the vehicle 1 are on the road surface having the large road-surface friction coefficient μ and the right front and rear wheels 5FR and 5RR are on the road surface having the small road-surface friction coefficient μ. In this case, the left front wheel 5FL which is on the road surface having the large road-surface friction coefficient μ and is positioned at the departure avoidance side is selected as the braking wheel to be activated in order to avoid the departure from the lane. Here, the LSD 16 is activated. The left front and rear wheels 5FL and 5RL may be selected as the braking wheel as needed. In this case, the LSD 16 may not be activated.

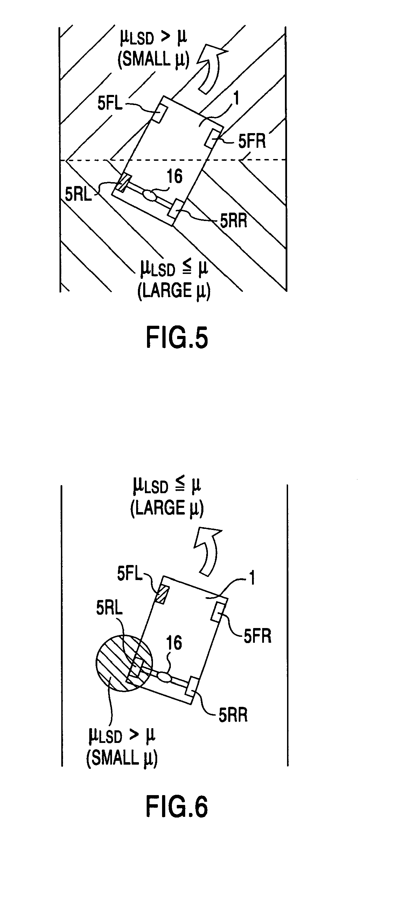

The road surface shown in FIG. 5 has a large road-surface friction coefficient μ on the rear side of the lane in the direction of travel of the vehicle 1 ($\mu \geq \mu_{LSD}$) and a small road-surface friction coefficient μ on the front side of the lane ($\mu < \mu_{LSD}$), while the vehicle 1 is traveling. The vehicle 1 has a tendency to depart from the lane in the right direction, that is, the departure avoidance direction is the left in this case. The front wheels 5FL and 5FR of the vehicle 1 are on the road surface having the small road-surface friction coefficient μ and the rear wheels 5RL and 5RR are on the road surface having the large road-surface friction coefficient μ. In this case, the left rear wheel 5RL which is on the road surface having the large road-surface friction coefficient μ and is positioned at the departure avoiding side is selected as the braking wheel to be activated in order to avoid the departure from the lane. Here, the LSD 16 may be activated, in place of the braking of the left rear wheel 5RL.

The road surface shown in FIG. 6 has a small road-surface friction coeflicient μ in a portion of the lane of travel having a large road-surface friction coefficient μ ($\mu < \mu_{LSD}$). For example, when there is a puddle in the lane of travel, the road surface has such a road surface state. The vehicle 1 has a tendency to depart from the lane in the right direction, that is, the departure avoidance direction is the left in this case. The left and right front wheels 5FL and 5FR and the right rear wheel 5RR of the vehicle 1 are on the road surface having the large road-surface friction coefficient μ and the left rear wheel 5RL is on the road surface having the small road-surface friction coefficient μ. In this case, the left front wheel 5FL which is on the road surface having the large road-surface friction coefficient μ and is positioned on the departure avoidance side is selected as the braking wheel to be activated in order to avoid the departure from the lane. Here, the LSD 16 is also activated.

In this way, the braking wheel is selected based on the road surface state in step S8. In addition, in step S8, the selection flag $F_{LSD}$ is set to "2". Then, the process proceeds to step S9.

In step S7, the selection flag $F_{LSD}$ is set to "0". Then, the process proceeds to step S9.

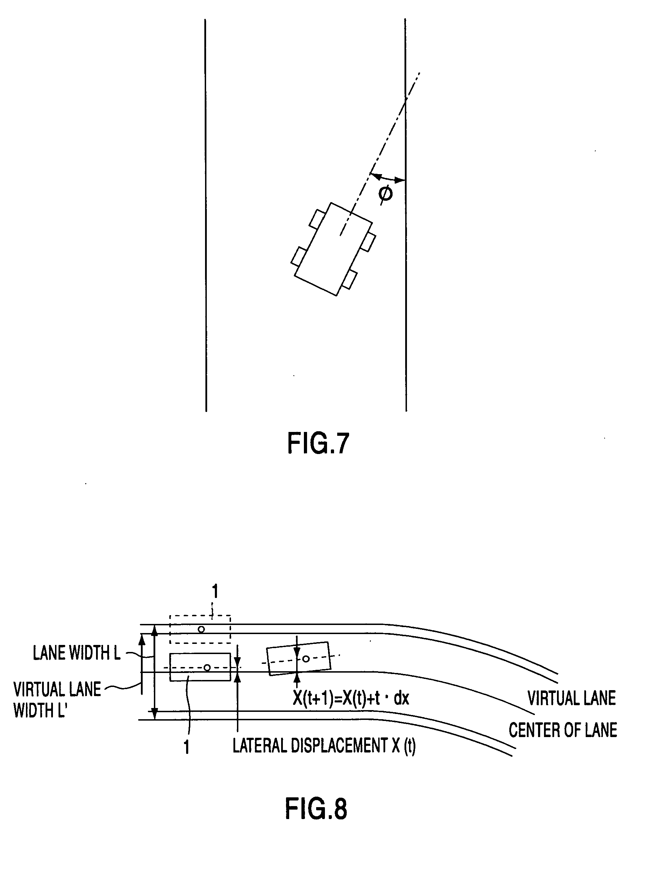

In step S9, the tendency of the lane departure is determined by the yaw angle ϕ (see FIG. 7) formed by the lane (ϕ=0) and the direction of travel of the vehicle. Specifically, it is determined whether the yaw angle ϕ (see FIG. 7) is greater than a predetermined threshold value ϕmax. Here, the predetermined threshold value ϕmax is selected from yaw angles which could be generated in the vehicle. Specifically, the predetermined threshold value is obtained from the following equation (3):

$$\phi\text{max} = T_{TLC}d\phi_d/dt \qquad \qquad \ldots(3)$$

Here, $T_{TLC}$ is the time (departure threshold value) until the vehicle departs from the lane of travel and is set, for example, from the viewpoint of additional comfort. "$\phi_d$" is a yaw angle necessary to avoid the lane departure of the vehicle. $d\phi_d/dt$ is a yaw rate generated in the vehicle at the time of avoiding the departure.

In step S9, when the yaw angle ϕ is greater than the predetermined threshold value $\phi_{max}$ ($\phi > \phi_{max}$), step S10 is performed and when the yaw angle ϕ is less than or equal to the predetermined threshold value ϕmax ($\phi \leq \phi$max), the process proceeds to step S11.

In step S10, the departure determining flag Fout is set to "ON" (Fout=ON). Then, the departure direction Dout is determined based on the lateral displacement X obtained in step S1. Specifically, when the vehicle has the lateral displacement to the left from the center of the lane of travel, the left direction is set as the departure direction Dout (Dout=left) and when the vehicle has the lateral displacement to the right from the center of the lane of travel, the right direction is set as the departure direction Dout (Dout=right). Then, the process proceeds to step S12.

On the other hand, in step S11, the tendency of lane departure is determined using an estimated departure time Tout. When it is determined in step S9 that the vehicle does not have tendency of the lane departure because the yaw angle φ is small, it can be determined from the viewpoint of period to time when the vehicle departs from the lane, based on the departure tendency of the vehicle.

In step S11, the estimated departure time Tout is first calculated. Specifically, supposed that dx is a variation (variation per unit time) of the lateral displacement X, and L is a lane width, the estimated departure time Tout is calculated from Equation (4) shown blow, using the lateral displacement X (see FIG. 8 for the values of X, dx, and L). For example, the lane width L is obtained from the image taken by the image pickup unit 13.

$$\text{Tout} = (L/2 - X)/dX \qquad (4)$$

In the Equation (4), the time until the vehicle 1 which is laterally displaced by X from the center of the lane (X=0) reaches an outer position (for example, road shoulder) apart by a distance L/2 from the current position, is calculated as the estimated departure time Tout.

The lane width L is obtained by processing the image taken by the image pickup unit 13. The position of the vehicle may be obtained from the navigation apparatus 14, and the lane width L may be obtained from map data of the navigation apparatus 14.

When the estimated departure time Tout is less than a departure threshold value $T_{TLC}$ (Tout<$T_{TLC}$), it is determined that the vehicle tends to depart from the lane of travel (has a departure tendency) and the process proceeds to S 10. In step S 10, the departure flag Fout is set to "ON" (Fout=ON) and the departure direction Dout is determined. Then, the process proceeds to step S12.

On the other hand, when the estimated departure time Tout is greater than or equal to a departure determining threshold value $T_{TLC}$ (Tout≥$T_{TLC}$), it is determined that the vehicle does not have tendency to depart from the lane of travel (does not have a departure tendency) and the process of FIG. 2 is ended.

Through the process of step S11, for example, when the vehicle gets apart from the center of the traveling lane and the estimated departure time Tout is less than the departure threshold value (Tout<$T_{TLC}$), the departure flag Fout turns to "ON" (Fout=ON). When the vehicle (where the vehicle is in the state of Fout=ON) returns to the center of the traveling lane and the estimated departure time Tout is greater than or equal to $T_{TLC}$ (Tout≥$T_{TLC}$), the departure flag Fout turns to "OFF" (Fout=OFF). For example, when the vehicle has a tendency to depart from the lane, an automatic control for avoiding the departure to be described below is performed or when the driver executes an avoidance operation, the departure flag Fout turns to "OFF" from "ON".

In step S12, it is determined that the driver is intentionally changing the lanes. Specifically, the driver's intention to change lanes is determined as described blow, on the basis of the direction indicator signal and the steering angle δ obtained in step S1.

When the direction (lighting side of a blinker or turn signal) indicated by the direction indicator signal is the same as the departure direction Dout obtained in step S10, it is determined that the driver is intentionally changing the lanes, and the departure flag Fout is changed to "OFF" (Fout=OFF). That is, the information of tendency to depart from the lane is changed to the determination result that the vehicle does not have tendency to depart from the lane.

When the direction (lighting side of a winker) indicated by the direction indicator signal is different from the departure direction Dout obtained in step S10, the departure flag Fout is maintained without change, that is, "ON" as it is (Fout=ON). That is, the determination result that the vehicle has the tendency to depart from the lane is maintained.

When the direction indicator switch 20 is not actuated, whether the driver is intentionally changing lanes is determined according to the steering angle δ. That is, when the driver steers the vehicle in the direction of departure, and the steering angle δ and the variation (variation per unit time) of the steering angle Δδ are greater than or equal to a predetermined value, respectively, it is determined that the driver is intentionally changing the lanes and the departure flag Fout is changed to "OFF" (Fout=OFF).

When the departure flag Fout is "ON" and the driver is not intentionally changing the lanes, the departure flag Fout is maintained in ON.

In step S12, when the departure flag Fout turns to OFF, the process shown in FIG. 2 is ended and when the departure flag Fout is maintained in ON, the process proceeds to step S13.

Subsequently, in step S13, a target yaw moment to be generated in the vehicle is calculated. The target yaw moment is a yaw moment to be applied to the vehicle in order to avoid the departure from the lane of travel.

Specifically, when it is determined in step S9 that the vehicle is tending to depart from the lane of travel, the target yaw moment Ms is calculated as a function of the yaw angle φ, and when it is determined in step S 11 that the vehicle is tending to depart from the lane of travel, the target yaw moment Ms is calculated as a function of the lateral displacement X. For example, when it is determined in step S9 that the vehicle is tending depart from the lane of travel, the target yaw moment Ms is calculated from the following equation (5):

$$Ms = K1 \cdot \phi + K2 \cdot X + K3 \cdot \beta \qquad (5)$$

Here, K1, K2, and K3 are gains which vary with variation of the vehicle speed V, and $\beta$ is the lane curvature.

When it is determined in step S11 that the vehicle is tending to depart from the lane of travel, the target yaw moment Ms is calculated from the following equation (6):

$$Ms = K4 \cdot X + K5 \cdot dX \qquad (6)$$

Here, K4 and K5 are gains varying with the vehicle speed V.

Subsequently, in step S 14, it is determined whether the selection flag $F_{LSD}$ is "1". Here, when the selection flag $F_{LSD}$ is "1" ($F_{LSD}$=1), the process proceeds to step S15, and when the selection flag $F_{LSD}$ is not "1" ($F_{LSD}$=0 or 2), the process proceeds to step S17.

In step S15, the distribution of driving power to the left and right wheels by the LSD 16 is set to generate the target yaw moment Ms obtained in step S 13. For example, when the vehicle is tending to depart to the right, the distribution of driving power to the right wheel is increased.

Subsequently, in step S16, the LSD is activated to obtain the distribution of driving power set in step S 15. Accordingly, the target yaw moment Ms is applied to the vehicle by means of the driving power difference between the left and right wheels so that the vehicle avoids the departure form the lane of travel.

On the other hand, in step S 17, it is determined whether the selection flag $F_{LSD}$ is set to "2". Here, when the selection flag $F_{LSD}$ is "2" ($F_{LSD}$=2), the process proceeds to step S 18, and when the selection flag $F_{LSD}$ is not "2" ($F_{LSD}$=0), the process proceeds to step S20.

In step S 18, the distribution of driving power to the left and right wheels by the LSD 16 and the braking power of the braking wheel is set to generate the target yaw moment Ms obtained in step S13.

In the case in which the selection flag $F_{LSD}$ is "2", the departure is avoided by applying the braking power to the braking wheel, and that the braking wheel is selected on the basis of the road surface state in step S8. For this reason, the distribution of driving power to the left and right wheels by the LSD 16 and the braking power of the braking wheel is set to generate the target yaw moment Ms obtained in step S 13. For example, when the vehicle is tending to depart to the right, the distribution of driving power to the right wheel is increased and the magnitude of the braking power applied to the left wheel which is on the departure avoidance side is determined.

Subsequently, in step S 19, the LSD 16 is activated to obtain the distribution of driving power set in step S 15 and a predetermined braking power is applied to the braking wheel. Accordingly, the target yaw moment Ms is applied to the vehicle by means of the braking power difference between the left and right wheels and the driving power difference between the left and right wheels so that the vehicle avoid the departure from the lane of travel.

On the other hand, in step S20 where the selection flag $F_{LSD}$ turns to "0", the magnitude of the braking power of the braking wheel is determined to generate the target yaw moment Ms obtained in step S13.

Subsequently, in step S21, the predetermined braking power determined in step S20 is applied to the braking wheel among the front and rear wheels. Accordingly, the target yaw moment Ms is applied to the vehicle by means of the braking power difference between the left and right wheels so that the vehicle avoids the departure from the lane of travel.

At the time of activation of the LSD 16 for avoiding the departure, the lane departure may be surely avoided by simultaneously monitoring the operation time of the LSD 16 and the yaw angle $\phi$.

For example, the operation time $T_{LSD}$ of the LSD 16 activated in order to avoid the lane departure is determined from the following equation (7):

$$T_{LSD} = \phi / (d\phi_d / dt) \qquad (7)$$

By allowing the LSD 16 to operate for the operation time $T_{LSD}$, it is possible to surely avoid the lane departure.

When a yaw acceleration (yaw jerk) $d^2\phi_d / dt^2$ generated at that time is great, it makes the driver uncomfortable or causes an unstable operation of the vehicle. Therefore, the LSD 16 is allowed to operate so as to make the yaw

acceleration (yaw jerk) $d^2\phi_d/dt^2$ smaller than or equal to a predetermined value.

A measured yaw angle $\phi$ may be fed back while the LSD 16 is operated for the operation time $T_{LSD}$, and the LSD 16 may be preferentially operated until the measured yaw angle $\phi$ reaches a yaw angle $\phi_{do}$ which is necessary to avoid the lane departure of the vehicle. Accordingly, it is possible to more surely avoid the lane departure. When the posture of the vehicle after avoiding the lane departure is set parallel to the traveling lane, the necessary yaw angle $\phi_{do}$ is 0.

The lane departure prevention system described above approximately operates as set forth below.

First, various data are read out from the sensors, the controller, and the control units (step S1). Subsequently, the vehicle speed V is calculated (step S2) and the vehicle speed V is compared with a predetermined speed $V_{min}$ (step 2'). When the vehicle speed V is lower than the predetermined speed $V_{min}$, then the process is ended. When the vehicle speed V is higher than the predetermined speed $V_{min}$, then the process proceeds to step 3. Further, the vehicle speed V is compared with the predetermined threshold value $V_{LSD}$ (step S3).

Here, when a value of the vehicle speed V is smaller than the predetermined threshold value $V_{LSD}$ ($V<V_{LSD}$), the selection flag $F_{LSD}$ is set to "1" (step S4). On the other hand, when the vehicle speed V is greater than or equal to the predetermined threshold value $V_{LSD}$ ($V \geq V_{LSD}$), the values $\mu$i (where i = fl, fr, rl, and rr) of the road-surface friction coefficient $\mu$ is determined with respect to all the wheels 5FL to 5RR (step S5). Here, when the values $\mu$i of the road-surface friction coefficient with respect to all the wheels 5FL to 5RR are less than the predetermined threshold value $\mu_{LSD}$, the selection flag $F_{LSD}$ is set to "1" (step S4).

On the other hand, when the values $\mu$i of the road-surface friction coefficient with respect to all the wheels 5FL to 5RR are not less than the predetermined threshold value $\mu_{LSD}$, it is determined whether the value $\mu$i of the road-surface friction coefficient with respect to one or some of the wheels 5FL to 5RR is less than the predetermined threshold value $\mu_{LSD}$ (step S6). Here, when the value $\mu$i of the road-surface friction coefficient with respect to one or some of the wheels 5FL to 5RR is less than the predetermined threshold value $\mu_{LSD}$, the braking wheel is selected depending upon the road surface state (see Table 1) and the selection flag $F_{LSD}$ is set to "2" (step S8).

On the other hand, when the value $\mu$i of the road-surface friction coefficient with respect to one or some of the wheels 5FL to 5RR is not less than the predetermined threshold value $\mu_{LSD}$, that is, when the values $\mu$i of the road-surface friction coefficient with respect to all the wheels 5FL to 5RR are greater than or equal to the predetermined threshold value $\mu_{LSD}$, the selection flag $F_{LSD}$ is set to "0" (step S7).

Then, a tendency of the lane departure is determined using by referring to the yaw angle $\phi$ (step S9). Here, when the yaw angle $\phi$ is greater than the predetermined threshold value $\phi$max ($\phi>\phi$max), that is, when it is determined from the yaw angle $\phi$ that the vehicle is tending to depart, the departure determining flag Fout is set to "ON" and the departure direction Dout is determined (step S10).

On the other hand, when the yaw angle $\phi$ is less than or equal to the predetermined threshold value $\phi$max ($\phi \leq \phi$max), a tendency of the lane departure is determined by referring to the estimated departure time Tout (step S11). Here, when the estimated departure time Tout is less than the departure threshold value $T_{TLC}$ (Tout< $T_{TLC}$), that is, when it is determined from the estimated departure time Tout that the vehicle is tending to depart, the departure determining flag Fout is set to "ON" and the departure direction Dout is determined (step S10). Otherwise, it is determined that the vehicle is not tending to depart (does not have a tendency of the lane departure) and the process for avoiding the departure is ended.

Then, whether the driver is intentionally changing lanes is determined on the basis of the direction indicator signal and the steering angle $\delta$ obtained in step S1 (step S12). Here, when it is determined that the driver is intentionally changing the lanes, the departure flag Fout turns to "OFF" (Fout=OFF) and the process for avoiding the departure is ended. When it is determined that the driver is not intentionally changing lanes, the departure flag Fout is maintained in ON (Fout=ON).

When the departure flag Fout is maintained in ON, the target yaw moment to be generated in the vehicle is calculated (step S13). Then, the selection flag $F_{LSD}$ is determined and the target yaw moment is applied to the vehicle by the driving power difference between the left and right driving wheels or the braking power difference between the left and right wheels, thereby performing the avoidance of departure.

That is, when the selection flag $F_{LSD}$ is "1", the avoidance of departure is executed by applying the target yaw moment to the vehicle by the driving power difference between the left and right driving wheels (steps S14 to S16). When the selection flag $F_{LSD}$ is "2", the avoidance of departure is executed by applying the target yaw moment to the vehicle by the braking power difference between the left and right wheels obtained by giving the braking power to the pre-selected braking wheel (see step S8) and the driving power difference between the left and right driving wheels (steps S 17 to S 19). When the selection flag $F_{LSD}$ is "0", the avoidance of departure is executed by applying the target yaw moment to the vehicle by the braking power difference between the left and right wheels (steps S20 and S21).

Here, in the case in which the selection flag $F_{LSD}$ is set to "1", the vehicle speed V is less than the predetermined threshold value $V_{LSD}$ ($V<V_{LSD}$), that is, the speed of the vehicle is small. In this case, the avoidance of departure is performed by generating the driving power difference between the left and right driving wheels.

For example, even when the braking power difference is generated between the wheels at the time of driving at a low speed, it is difficult to surely apply the sufficient yaw moment to the vehicle. In this case, it is not possible to surely avoid the lane departure. In the above embodiment, the vehicle speed V is compared with a predetermined speed $V_{min}$. However, when the vehicle speed is low, the desired yaw moment may be applied to the vehicle by generating the driving power difference between the left and right wheels, thereby surely avoiding the lane departure.

In addition, when the vehicle speed V is greater than or equal to the predetermined threshold value $V_{LSD}$ ($V \geq V_{LSD}$) but the values $\mu i$ of the road-surface friction coefficient with respect to all the wheels 5FL to 5RR are less than the predetermined threshold value $\mu_{LSD}$, the selection flag $F_{LSD}$ is also set to "1". Accordingly, when the vehicle speed is middle or high and the whole road surface of the traveling lane has the low road-surface friction coefficient, the avoidance of departure is performed by generating the driving power difference between the left and right driving wheels.

For example, even if the braking power difference is generated between the wheels when the vehicle travels on the road surface having the small surface-road friction coefficient, it is difficult to surely apply the sufficient yaw moment to the vehicle because the braking wheels may slip. In this case, it is not possible to surely avoid the lane departure.

Accordingly, even when the vehicle travels on the road surface having the small surface-road friction coefficient, the avoidance of departure can be surely performed by generating the driving power difference between the left and right driving wheels thereby surely applying the desired yaw moment to the vehicle.

In the case in which the selection flag $F_{LSD}$ is set to "2", the vehicle speed V is greater than or equal to the predetermined threshold value $V_{LSD}$ ($V \geq V_{LSD}$) and the value $\mu i$ of the road-surface friction coefficient with respect to one or some of the wheels is less than the predetermined threshold value $\mu_{LSD}$, that is, the vehicle travels with a middle or high speed and the vehicle travels, for example, on the split friction coefficient road where the small road-surface friction coefficient and the large road-surface friction coefficient are mixed. In this case, the avoidance of departure is performed by generating the driving power difference between the left and right driving wheels and generating the braking power difference between the left and right wheels. The braking wheels between which the braking power difference is generated are selected depending upon the traveling lane state.

For example, even when the driving power is applied to the driving wheels with a predetermined distribution of driving power by the LSD 16, the driving wheels may slip on the road surface having the small road-surface friction coefficient so that it may be difficult to surely apply the yaw moment. Specifically, when the driving wheel on the lane departing side among the left and right driving wheels is on the road surface having the small road-surface friction coefficient and the driving wheel on the departure avoiding side is on the road surface having the large road-surface friction coefficient, such a phenomenon is remarkable.

For this reason, the driving power is applied to the driving wheels with a predetermined distribution of driving power by the LSD 16 and when a wheel (wheel at the departure avoiding side) is on the road surface having the large road-surface friction coefficient, the braking power is also applied to the wheels to generate the braking power difference between the left and right wheels, thereby surely applying the desired yaw moment to the vehicle. Accordingly, the lane departure can be surely avoided.

In the case where the selection flag $F_{LSD}$ is set to "0", the vehicle speed V is greater than or equal to the predetermined threshold value $V_{LSD}$ ($V \geq V_{LSD}$), and the values $\mu i$ of the road-surface friction coefficient with respect to all the wheels 5FL to 5RR are greater than or equal to the predetermined threshold value $\mu_{LSD}$, that is, the vehicle travels at a middle or high speed, and the vehicle travels, for example, on the road surface having only the large road-surface friction coefficient. In this case, the avoidance of departure is performed by generating the braking power difference between the left and right wheels. Accordingly, when the vehicle speed is middle or high, and the entire lane of travel having the large road-surface friction coefficient, the braking wheels do not slip. As a result, the desired yaw moment can be applied to the vehicle by generating the braking power difference between the left and right wheels, thereby surely avoiding the lane departure.

Next, advantages of the embodiment will be described below.

As described above, when the vehicle has a tendency of the lane departure, the yaw moment is applied to the vehicle by the driving power difference between the left and right driving wheels. Accordingly, it is possible to apply the yaw moment optimal for avoiding the lane departure to the vehicle, thereby surely avoiding the departure.

As described above, the yaw moment is applied to the vehicle by combining the driving power difference between the left and right driving wheels and the braking power difference between the left and right wheels on the basis of the selection flag $F_{LSD}$, that is, on the basis of the vehicle speed or the road-surface friction coefficient of the lane of travel. Accordingly, it is possible to surely avoid the lane departure by applying the yaw moment, which is suitable for the vehicle speed or the road-surface friction coefficient of the lane and optimal for avoiding the lane departure, to the vehicle.

In the above-mentioned embodiment, the process of applying the yaw moment to the vehicle by the driving power difference or the process of applying the yaw moment to vehicle by the braking power difference is selected on the basis of the vehicle speed of the vehicle or the magnitude of the road-surface friction coefficient. However, the present invention is not limited to it but the processes may be selected on the basis of various parameters. For example, when the vehicle status such as the vehicle speed is used as the parameter, acceleration, steering angle, and lateral acceleration may be used in addition to the vehicle speed. When the road state such as the road-surface friction coefficient is used as the parameter, for example, a road gradient or a cant state may be used in addition to the road-surface friction coefficient. In addition, the peripheral environment of the vehicle such as an inter-vehicle distance with a preceding vehicle or an inter-vehicle distance with a succeeding vehicle may be set as the parameter.

Details thereof are as follows.

Example of driving state:

When the acceleration is plus (under acceleration), the yaw moment is applied by the driving power difference and when the acceleration is minus (under deceleration), the yaw moment is applied by the braking power difference. When the amount of steering is less than or equal to a predetermined value, the yaw moment is applied by the driving power difference and when the amount of steering is greater than the predetermined value, the yaw moment is applied by the braking power difference. When the lateral acceleration is less than or equal to a predetermined value, the yaw moment is applied by the driving power difference and when the lateral acceleration is greater than the predetermined value, the yaw moment is applied by the braking power difference.

Example of road state:

In case of an ascending slope, the yaw moment is applied by the driving power difference and in case of a down slope, the yaw moment is applied by the braking power difference. When the lane of travel is a cant road and the vehicle departs downward in the slope, the yaw moment is applied by the driving power difference and when the vehicle departs upward in the slope, the yaw moment is applied by the braking power difference.

Example of peripheral environment:

When a succeeding vehicle is within a predetermined range of distance, the yaw moment is applied by the driving power difference. When a preceding vehicle is within a predetermined range of distance, the yaw moment is applied by the braking power difference.

A second embodiment will be now described.

The second embodiment relates to a vehicle provided with a lane departure preventing system similar to that of the first embodiment. In the second embodiment, the lane departure avoidance control is performed according to a difference in force acting on the front left and right wheels; that is, according to torque steer resulting from a difference in the braking power applied to the left and right wheels.

Here, in torque steer, a moment is generated around a kingpin axis as a result of the difference in braking power applied to the left and right wheels, and the moment is transmitted to a steering system, thereby serving as a force for turning a steering wheel. That is, torque steer is activated when steering is affected by the road surface in a manner rendering driving of the vehicle unstable.

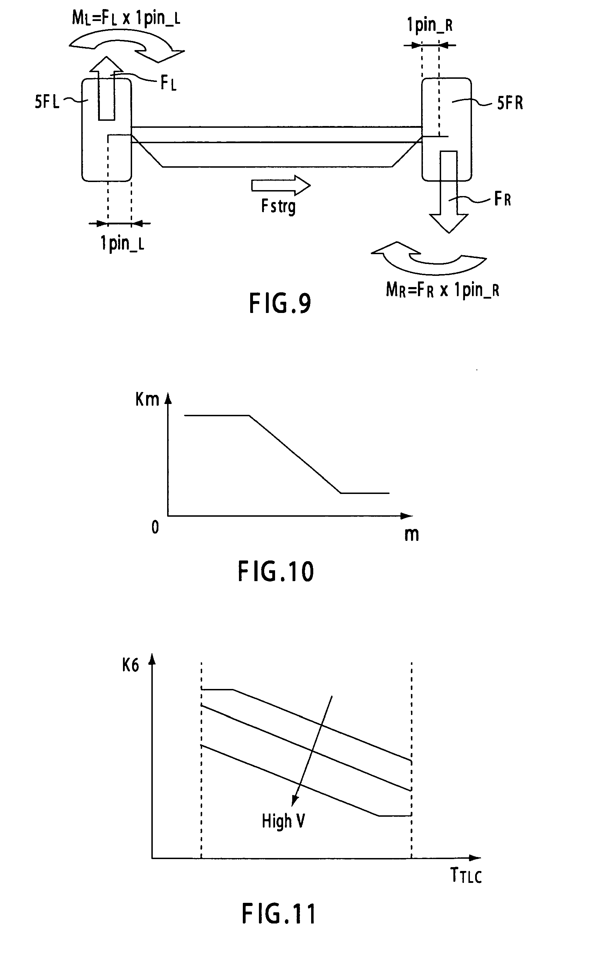

Torque steer is described with reference to FIG. 9.

When a driving force FL acts on the left front wheel 5FL, a moment ML generated around the kingpin axis of the left front wheel 5FL can be expressed by the equation (8):

$$M_L = F_L \cdot l_{pin\_L} \qquad \ldots (8)$$

When a driving force FR acts on the right front wheel 5FR, a moment MR generated around the kingpin axis of the right front wheel 5FR can be expressed by the following equation (9):

$$M_R = F_R \cdot l_{pin\_R} \qquad \ldots (9)$$

Here, $F_L \cdot l_{pin\_L}$ and $F_L l_{pin\_R}$ denote the kingpin offset distance of the respective left and right wheels.

The force $F_{strg}$ acting on the steering system as torque steer is expressed by the following equation (10):

$$F_{strg} = K_{\mu 2} \cdot K_{strg} \cdot (M_L - M_R) \qquad (10)$$

Here, $K_{\mu 2}$ is a torque steer gain and has, for example, the characteristics shown in FIG. 10. As shown in FIG. 10, the torque steer gain $K_{\mu 2}$ is constant at a high value when the coefficient of friction of the road surface is low, becomes lower in inverse proportion when the road-surface friction coefficient is greater than a certain value, and is constant at a low value when the road-surface friction coefficient is greater than a certain value. $K_{strg}$ is a coefficient obtained, for example, through experimentation. The value may vary with variation of vehicle speed.

In this manner, the force $F_{strg}$ acting on the steering system is generated by torque steer.

Details of the lane departure avoidance control by means of torque steer is described below.

In the second embodiment, avoidance of lane departure is achieved by applying the target yaw moment to the vehicle by a difference in driving power applied to the left and right driving wheels or a difference in braking power applied to the left and right wheels on the basis of vehicle speed, the road-surface friction coefficient, and the departure tendency, which is basically similar to that in the first embodiment. When a difference in braking power is applied to the left and right front wheels, torque steer described above is activated.

Accordingly, since torque steer is activated as a result of the braking power difference and the force $F_{strg}$ is applied to the steering system, a responsive force $(-F_{strg})$ is applied to the steering system.

Specifically, an actuator provided with a rack or a column is activated to apply the responsive force to the steering system. This input is made before activating the LSD (driving wheels) or the braking wheels for avoiding lane departure. That is, the LSD (driving wheels) or the braking wheels are operated in order to avoid lane departure, by providing a first delay after the responsive force is applied through activation of the actuator. For example, the controller 8 controls the actuator on the basis of the driving power difference between the left and right driving wheels or the braking power difference between the left and right wheels.

The manner in which the responsive force is applied will now be described with a specific example of a value of braking power for avoiding lane departure. Specifically described is the manner in which the final braking fluid pressure is calculated depending upon existence of braking control for avoiding lane departure.

When the departure determining flag Fout is "OFF" (Fout=OFF); that is, when it is determined that the vehicle is not tending to depart from the lane of travel, target braking fluid pressures Psi (i = fl, fr, rl, and rr) of the respective wheels 5FL to 5RR are used as the master cylinder fluid pressures Pmf and Pmr, as shown in the following equations (11) and (12):

$$Psfl = Psfr = Pmf \qquad ...(11)$$

$$Psrl = Psrr = Pmr \qquad ...(12)$$

Here, Pmf is a master cylinder fluid pressure for the front wheels. Pmr is a master cylinder fluid pressure for the rear wheels and is calculated on the basis of the master cylinder fluid pressure Pmf for the front wheels according to the front and rear distribution.

On the other hand, when the departure flag Fout is "ON" (Fout=ON); that is, when it is determined that the vehicle is tending to depart from the lane of travel, the front-wheel target braking fluid pressure difference $\Delta Psf$ and the rear-wheel target braking fluid pressure difference $\Delta Psr$ are calculated on the basis of the target yaw moment Ms.

If Ms < Ms1,

$$\Delta Psf = 0 \qquad ...(13)$$

$$\Delta Psr = 2 \cdot Kbr \cdot Ms/T \qquad ...(14)$$

If Ms ≥ Ms1,

$$\Delta Psf = 2 \cdot Kbf\,(Ms\text{-}Ms1)/T \qquad \ldots(15)$$

$$\Delta Psr = 2 \cdot Kbr\,Ms1/T \qquad \ldots(16)$$

Here, Ms1 is a setting threshold value. T is a tread and is constant for the purpose of simplification. Kbf and Kbr are conversion coefficients of the front wheels and the rear wheels in the case in which the braking power is converted into braking fluid pressure, and are defined depending on the brake specifications.

In this manner, the braking power respectively applied to the wheels is distributed based on the magnitude of the target yaw moment Ms. Accordingly, when the target yaw moment Ms is lower than the setting threshold value Ms1, the braking power difference is applied to the left and right rear wheels by setting the front-wheel target braking fluid pressure difference $\Delta Psf$ at "0" and applying a predetermined value to the rear-wheel target braking fluid pressure difference $\Delta Psr$. When the target yaw moment Ms is greater than or equal to the setting threshold value Ms1, the braking power difference is generated between the left and right front and rear wheels by applying predetermined values to the respective target braking fluid pressure differences $\Delta Psf$ and $\Delta Psr$.

The final target braking fluid pressures Psi (i = fl, fr, rl, and rr) of the wheels are calculated from the following equation (17) according to the target braking fluid pressure differences $\Delta Psf$ and $\Delta Psr$ calculated above and deceleration manipulation by the driver, that is, the master cylinder fluid pressures Pmf and Pmr:

$$Psfl = Pmf$$

$$Psfr = Pmf + \Delta Psf$$

$$Psrl = Pmr$$

$$Psrr = Pmr + \Delta Psr \qquad \ldots(17)$$

The target yaw moment for avoiding the lane departure is applied to the vehicle by the braking power respectively applied

Then, before activating the braking wheels to apply the target yaw moment to the vehicle, the actuator provided with a rack or column, is activated to apply the responsive force to the steering system.

For example, when the target yaw moment is applied to the vehicle by the braking power difference, the input $F_{strg}$ to the steering system can be expressed by the following equation (18) based on the equations (8) to (10) and the equation (17):

$$F_{strg} = K_{\mu2} \cdot K_{strg} \cdot K_{strg\_P} \cdot \{Pmf\,l_{pin\_L} - (Pmf + \Delta Psf)\,l_{pin\_L}\} \ \ldots(18)$$

Here, $K_{strg\_P}$ is a coefficient for calculating the moment around the kingpin axis from the master cylinder fluid pressure.

The negative $(-F_{strg})$ of the value $F_{strg}$ is applied to the steering system as the responsive force.

As a result, even when there is input to the steering system due to torque steer, the responsive force cancels the input. Accordingly, it is possible to perform lane departure avoidance control while preventing activation of torque steer resulting from the braking power difference between the left and right wheels.

The present lane departure prevention system is not limited to the above-described embodiments.

That is, in the first and second embodiments, the LSD is described as being provided only at the rear wheel side of the vehicle, but the present lane departure system is not so limited. That is, the present system may be applied to a vehicle in which both the front and rear wheels are provided with the LSD, such as a four-wheel drive vehicle, and may be applied to a vehicle in which the front wheels are provided with the LSD such as a front-wheel drive vehicle. For example, in these cases, when the wheel at the departure avoiding side is placed on a road surface having a high coefficient of friction, that wheel is also selected as the braking wheel in step S8.

In the second embodiment, the responsive force $F_{strg}$ may be applied to the steering system in torque steer resulting from the driving power difference generated between the left and right front wheels.

Determination of a tendency to depart from a lane is not limited to the order described above. For example, the tendency may be determined by calculating the estimated value of the lateral displacement Xs of the vehicle center of gravity after a predetermined period of time T (for example, the time $T_{TLC}$) and then comparing the estimated value Xs with a position $X_L$ of the boundary of the vehicle center of gravity in the traveling lane.

For example, the estimated value Xs is obtained from the following equation (18):

$$Xs = dx \times T + X0 \qquad\qquad ...(18)$$

Here, X0 is the current lateral displacement of the vehicle. The position $X_L$ of the boundary of the vehicle center of gravity is obtained from the following equation (19):

$$X_L = \pm(L-H)/2 \qquad\qquad ...(19)$$

Here, L is the lane width, and H is the width of the vehicle. The positive value of the position $X_L$ of the boundary of the vehicle center of gravity indicates the right side of the traveling lane, and the negative value of the position $X_L$ of the boundary of the vehicle center of gravity indicates the left side of the traveling lane.

By using the values obtained in this way, when $|Xs| \geq |X_L|$, it is determined that the vehicle has is tending to depart from the lane and the departure flag Fout is set to "ON".

In this case, as shown in the following equation (20), the target yaw moment Ms may be obtained using the estimated value Xs and the position $X_L$ of the boundary of the vehicle center of gravity:

$$Ms = K6\,(Xs - X_L) \qquad\qquad ...(20)$$

Here, K6 is a gain (>0) and is established based on the vehicle speed V and the time $T_{TLC}$. FIG. 11 shows an example of a relationship between the gain K6, the vehicle speed V, and the time $T_{TLC}$. The gain K6 is set to be inversely proportional to the time $T_{TLC}$ and is set smaller as the vehicle speed V becomes larger.

In the embodiments described above, the process in steps S16 and S 19 executed by the controller 8 and the LSD 16 is carried out by the driving-power difference generating unit for generating the driving power difference between the left and right driving wheels. The process in steps S 19 and S21 executed by the controller 8 is carried out by the braking-power difference generating unit for generating the braking power difference between the left and right wheels, and the process in steps S9 to S11 executed by the controller 8 is carried out by the departure tendency determining unit for determining the tendency of departure of the vehicle from the lane of travel. The process in steps S 13 to S 19 executed by the controller 8 is carried out by the yaw moment applying unit for switching the departure avoidance control for applying the yaw moment to the vehicle by the driving-power difference generating unit and the departure avoidance control for applying the yaw moment to the vehicle by the braking-power difference generating unit, on the basis of the traveling status of the vehicle when the departure tendency determining unit determines that the vehicle has tendency of lane departure.

The functions of the actuator provided with a rack or a column and the controller 8 for controlling the actuator implement the responsive force input units for inputting the responsive force, which cancels the input of the steering system due to torque steer resulting from the braking power difference or the driving power difference generated between the left and right wheels by the yaw moment applying unit, to the steering system.

This application claims priority from Japanese Patent No. 2004-381078, filed on 28 December 2004, the contents of which are incorporated herein by reference.

**Claims**

1.  A system for preventing departure of a vehicle from a lane of travel comprising:

    driving-power difference generating means for generating a driving power difference between left and right driving wheels;
    braking power difference generating means for generating a braking power difference between left and right wheels;
    departure tendency determining means for determining whether the vehicle is tending to depart from the lane of travel; and
    control means for controlling the driving-power difference generating means and/or the braking power difference generating means to selectively apply a yaw moment to the vehicle, in dependence on a driving state of the vehicle, when said departure tendency determining means determines that the vehicle has a tendency to depart from the lane of travel.

2.  A system as claimed in claim 1, further comprising speed detecting means for detecting a speed of the vehicle, wherein said control means is arranged to control the driving-power difference generating means and/or the braking power difference generating means to selectively apply a yaw moment to the vehicle, in dependence on a detection result of the speed detecting means.

3.  A system as claimed in claim 2, wherein said control means is arranged to control the driving-power difference generating means to apply the yaw moment to the vehicle when the vehicle speed is lower than a predetermined speed and to control the braking-power difference generating means to apply the yaw moment to the vehicle when the vehicle speed is equal to or higher than the predetermined speed.

4.  A system as claimed in any of claims 1 to 3, further including friction detecting means for detecting a road-surface friction coefficient of the lane of travel, wherein the control means is arranged to control the driving-power difference generating means and the braking-power generating means, in dependence on a detection result of the friction detecting means.

5.  A system as claimed in claim 4, wherein the control means is arranged to control the driving-power difference generating means to apply the yaw moment to the vehicle when the lane of travel has a relatively small road-surface friction coefficient and to control the braking-power difference generating means to apply the yaw moment to the vehicle when the lane of travel of the vehicle has a relatively large road-surface friction coefficient.

6.  A system as claimed in claim 4 or claim 5, wherein when the lane of travel has both a first road surface having a relatively small road-surface friction coefficient and a second road surface having a relatively large road-surface friction coefficient, the control means is arranged to control the driving-power difference generating means to generate a driving power difference between the left and right driving wheels on the first road surface and to control the braking power difference generating means to generate a braking power to a wheel on the second road surface.

7.  A system as claimed in any of claims 1 to 6, wherein the system is arranged to apply a reactive force to a steering system of the vehicle for canceling an input to the steering system due to a torque steer resulting from a driving power difference generated between the left and right wheels.

8.  A system as claimed in any of claims 1 to 7, wherein the system is arranged to apply a reactive force to a steering system of the vehicle for canceling an input to the steering system due to a torque steer resulting from a braking power difference generated between the left and right wheels.

9.  A method for preventing departure of a vehicle, having at least two driving wheels, from a lane of travel comprising:

    generating a driving power difference between the driving wheels;
    generating a braking power difference between the wheels;
    determining whether there is a tendency for the vehicle to depart the lane of travel; and
    selectively applying a yaw moment to the vehicle by means of said driving power difference and/or said braking power difference.

10. A method as claimed in claim 9, further comprising the steps of:

detecting a vehicle speed of the vehicle, and
selectively applying a yaw moment to the vehicle in dependence thereon.

11. A method as claimed in claim 9 or claim 10, further comprising the steps of:

detecting a road-surface friction coefficient of the lane of travel, and
selectively applying a yaw moment to the vehicle in dependence thereon.

12. A method as claimed in any of claims 9 to 11, further comprising selectively applying a reactive force to a steering system of the vehicle thereby to cancel an input to said steering system due to a torque steer resulting from the driving power difference and/or the braking power difference generated between the wheels.

FIG.1

START

READ OUT VARIOUS DATA — S1

CALCULATE VEHICLE SPEED — S2

S2′

V < Vmin — Yes / No

V < VLSD — S3 — No / Yes

FLSD = 1 — S4

mLSD > m in all wheels ? — S5 — Yes / No

mLSD > m in some wheels ? — S6 — Yes / No

FLSD = 0 — S7

- SELECT BRAKING WHEEL DEPENDING UPON ROAD SURFACE STATES.
- FLSD = 2 — S8

φ > φmax — S9 — No / Yes

Tout < TTLC — S11 — No / Yes

Fout = ON — S10

IS INTENTION OF DRIVER DETERMINED? (Fout=OFF?) — S12 — Yes / No

CALCULATE TARGET YAW MOMENT — S13

FLSD = 1? — S14 — No / Yes

FLSD = 2? — S17 — No / Yes

DETERMINE BRAKING POWER OF BRAKING WHEEL — S20

DETERMINE DRIVING POWER DISTRIBUTION OF LSD AND BRAKING POWER OF BRAKING WHEEL — S18

DETERMINE DRIVING POWER DISTRIBUTION OF LSD — S15

ACTIVATE BRAKING WHEEL — S21

ACTIVATE LSD AND BRAKING WHEEL — S19

ACTIVATE LSD — S16

RETURN

**FIG.2**

19

FIG.3

FIG.4

$\mu_{LSD} > \mu$
(SMALL $\mu$)

5FL

1

5FR

16

5RL

5RR

$\mu_{LSD} \leqq \mu$
(LARGE $\mu$)

**FIG.5**

$\mu_{LSD} \leqq \mu$
(LARGE $\mu$)

5FL

1

5RL

5FR

16

5RR

$\mu_{LSD} > \mu$
(SMALL $\mu$)

**FIG.6**

FIG.7

FIG.8

$M_L = F_L \times 1pin\_L$

$1pin\_R$

$F_L$

5FL

5FR

$F_{strg}$

$F_R$

$1pin\_L$

$M_R = F_R \times 1pin\_R$

## FIG.9

Km

0

m

## FIG.10

K6

High V

$T_{TLC}$

## FIG.11

**EP 1 676 764 A1**

**European Patent Office**

**EUROPEAN SEARCH REPORT**

Application Number

EP 05 25 7952

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/007239 A1 (MATSUMOTO SHINJI ET AL) 17 January 2002 (2002-01-17) * page 4, paragraph 66 * * page 10, paragraph 131 - page 12, paragraph 164; figures 12B,13,14 * | 1,2,9,10 | INV. B60T8/1755 B60K31/00 |
| Y | | 4,11 | |
| Y | US 6 282 478 B1 (AKITA TOKIHIKO) 28 August 2001 (2001-08-28) * column 1, line 5 - column 2, line 22 * | 4,11 | |
| A | EP 1 298 021 A (NISSAN MOTOR COMPANY, LIMITED) 2 April 2003 (2003-04-02) * column 8, paragraph 36 - column 10, paragraph 43; figure 2 * | 1-12 | |
| A | US 2004/158377 A1 (MATSUMOTO SHINJI ET AL) 12 August 2004 (2004-08-12) * page 6, paragraph 46 - page 9, paragraph 76 * | 1-12 | |

TECHNICAL FIELDS SEARCHED (IPC)

B60T
B60K
G05D

The present search report has been drawn up for all claims

| Place of search | Date of completion of the search | Examiner |
|---|---|---|
| Munich | 7 April 2006 | Marx, W |

EPO FORM 1503 03.82 (P04C01)

## ANNEX TO THE EUROPEAN SEARCH REPORT
## ON EUROPEAN PATENT APPLICATION NO.

EP 05 25 7952

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2006

| Patent document cited in search report | | Publication date | Patent family member(s) | | Publication date |
|---|---|---|---|---|---|
| US 2002007239 | A1 | 17-01-2002 | JP | 2001301640 A | 31-10-2001 |
| US 6282478 | B1 | 28-08-2001 | NONE | | |
| EP 1298021 | A | 02-04-2003 | JP | 2003104091 A | 09-04-2003 |
| | | | US | 2003062769 A1 | 03-04-2003 |
| US 2004158377 | A1 | 12-08-2004 | CN | 1522910 A | 25-08-2004 |
| | | | DE | 102004006540 A1 | 26-08-2004 |
| | | | JP | 2004243787 A | 02-09-2004 |

EPO FORM P0459

For more details about this annex : see Official Journal of the European Patent Office, No. 12/82